# DEMANDE DE BREVET EUROPEEN

(11) **EP 4 394 651 A1**
(43) Date de publication de la demande: **03.07.2024**
(21) Numéro de dépôt: 23220253.1
(22) Date de dépôt: 27.12.2023
(51) Int. Cl.: G06F 40/30, G06F 16/31, G06F 16/33, G06F 40/216, G06F 40/284, G06F 40/58

(54) **PROCÉDÉ MIS EN OEUVRE PAR ORDINATEUR POUR UNE INDEXATION D'UNE PLURALITÉ DE TEXTES À INDEXER ET PROCÉDÉ DE RECHERCHE CORRESPONDANT**

(30) Priorité: 27.12.2022 FR 2214536
(71) Demandeur: THALES, 92190 Meudon (FR)
(72) Inventeur: BLAUDEZ, Eric, 91767 PALAISEAU CEDEX (FR)
(74) Mandataire: Lavoix

(57) **Abrégé**

La présente invention concerne un procédé pour une indexation d'une pluralité de textes à indexer, le procédé comprenant les étapes suivantes :
obtenir la pluralité de textes à indexer;
transformer, par un réseau de neurones, les textes à indexer dans un ou plusieurs vecteurs dans un espace latent, le réseau de neurones étant appris avec des textes d'apprentissage en gelant les dernières K couches du réseau de neurones pour supprimer des mots sans signification spécifique ;
déterminer pour chaque vecteur pour chaque texte à indexer au moins un identificateur unique d'un groupe le plus proche;
créer des informations agnostiques des textes à indexer, les informations agnostiques comprenant les identificateurs uniques déterminés, et associer les informations agnostiques aux textes à indexer respectifs ;
indexer les informations agnostiques.

## Description

La présente invention concerne un procédé mis en oeuvre par ordinateur pour une indexation d'une pluralité de textes à indexer, les textes étant rédigés dans au moins deux langues différentes.

En outre la présente invention concerne un procédé de recherche d'un mot dans une pluralité de textes indexés, les textes étant rédigés dans au moins deux langues différentes.

Lors des traductions ou de recherche multilingue souvent un langage pivot est utilisé. Par exemple un mot est traduit d'un langage A vers un langage B, qui est la langage pivot, et ensuite du langage B vers un langage C, D ou E. Dans d'autres solutions des indices multiples sont utilisés.

L'entreprise Google a divulgué un modèle d'apprentissage du type transformer pour analyser des langues dans l'article « Attention Is All You Need » de Ashish Vaswani et al. arXiv:1706.03762v5 [cs.CL] du 6 Dec 2017.

L'entreprise Google a divulgué un modèle pour coder une phrase dans des vecteurs multidimensionnels. Un article « language-agnostic BERT sentence embedding » https://doi.org/10.48550/arXiv.2007.01852 de Feng et al. a été publié le 8 Mars 2022. L'intelligence artificielle « language-agnostic BERT sentence embedding » est aussi appelé LaBSE. BERT étant une abréviation pour « Bidirectional Encoder Représentations from Transformers » est une cadre d'apprentissage machine pour le traitement des langages naturelles. BERT est une technique sur la base d'un réseau de neurones.

Le but de la demande est de proposer un procédé pour améliorer la recherche dans des systèmes d'information gérant plusieurs langues.

Ce but est atteint, conformément à l'invention, par un procédé mis en oeuvre par ordinateur pour une indexation d'une pluralité de textes à indexer, les textes étant rédigés dans au moins deux langues différentes, le procédé comprenant les étapes suivantes :
obtenir la pluralité de textes à indexer, les textes étant rédigés dans au moins deux langues différentes ;
transformer, par un réseau de neurones du type transformeur, les textes à indexer dans un ou plusieurs vecteurs dans un espace latent, le réseau de neurones étant appris avec des textes d'apprentissage lors d'un procédé d'apprentissage en gelant les dernières K couches du réseau de neurones ayant N couches pour supprimer des mots sans signification spécifique, K étant inférieur à N ;
déterminer pour chaque vecteur pour chaque texte à indexer au moins un identificateur unique d'un groupe le plus proche, les groupes étant fixés lors du procédé d'apprentissage en regroupant des vecteurs dans l'espace latent des textes d'apprentissage et en associant un identificateur unique à chaque groupe ;
créer des informations agnostiques des textes à indexer, les informations agnostiques comprenant les identificateurs uniques déterminés, et associer les informations agnostiques aux textes à indexer respectifs ;
indexer les informations agnostiques pour créer un index. Suivant d'autres aspects avantageux de l'invention, le procédé comprend une ou plusieurs des caractéristiques suivantes, prises isolément ou suivant toutes les combinaisons techniquement possibles :
   - les textes sont rédigés dans au moins cinq langues différentes ;
   - l'algorithme d'intelligence artificielle est un réseau de neurones étant du type transformeur pour le traitement automatique des langues ;
   - le nombre K des couches est supérieur à ou égale à un ;
   - lors du procédé de l'apprentissage du réseau de neurones du type transformeur, le réseau de neurones du type transformeur est entrainé en transformant des textes d'apprentissage écrits dans une première langue dans au moins un première vecteur dans l'espace latent et les mêmes textes d'apprentissage écrits dans une langue pivot dans au moins un deuxième vecteur dans l'espace latent, les paramètres du réseau de neurones du type transformeur entrainés sont identiques lors de la transformation des textes d'apprentissage écrits dans la première langue et des mêmes textes écrits dans la langue pivot dans le ou les vecteurs de l'espace latent, et en minimisant une erreur entre le ou les premiers vecteurs et le ou les deuxièmes vecteurs, dans lequel les N-K premières couches du réseau de neurones sont gelées ; et/ou
   - chaque groupe étant représenté par un vecteur représentatif pour son groupe, en particulier un centroïde, l'étape déterminer pour chaque vecteur de chaque texte à indexer au moins un identificateur unique d'un groupe le plus proche comprend déterminer pour chaque vecteur de chaque texte à indexer au moins le vecteur représentatif le plus proche.

Ce but est également atteint, conformément, par un procédé mis en oeuvre par ordinateur de recherche d'un mot dans une pluralité de textes indexés, les textes étant rédigés dans au moins deux langues différentes, le procédé comprenant les étapes suivantes :
obtenir un terme de recherche ;
transformer, par un algorithme d'intelligence artificielle comprenant un réseau de neurones du type transformeur, le terme de recherche dans au moins un vecteur d'un espace latent, le réseau de neurones étant appris avec des textes d'apprentissage lors d'un procédé d'apprentissage en gelant les dernières K couches du réseau de neurones ayant N couches pour supprimer des mots sans signification spécifique, K étant inférieur à N ;
déterminer pour chaque vecteur dans l'espace latent du terme de recherche un identificateur unique d'un groupe le plus proche, les groupes étant fixés lors du procédé d'apprentissage en regroupant des vecteurs dans l'espace latent des textes d'apprentissage et en associant un identificateur unique à chaque groupe ;
chercher dans l'index crée le ou les identificateurs uniques déterminés ; et
déterminer le ou les textes indexés étant associés aux identificateurs uniques déterminés. L'invention a également pour objet un dispositif comprenant des moyens de mettre en oeuvre les étapes du procédé tel que défini ci-dessus.

L'invention a également pour objet un produit programme d'ordinateur comprenant des instructions qui, lorsque le programme est exécuté par un ordinateur, conduisent celui-ci à mettre en oeuvre les étapes du procédé tel que défini ci-dessus.

L'invention concerne également un signal d'un support de données, portant le produit programme d'ordinateur tel que défini ci-dessus.

D'autres caractéristiques et avantages de la présente invention ressortiront de la description faite ci-dessous, en référence aux dessins, qui illustrent un exemple de réalisation dépourvu de tout caractère limitatif et dans lesquels :
- la figure 1 montre un organigramme d'un procédé d'apprentissage selon un mode de réalisation ;
- la figure 2 est une vue schématique d'un espace latent ;
- la figure 3 montre schématiquement une étape d'apprentissage ;
- la figure 4 montre schématiquement un organigramme d'un procédé d'indexation ;
- la figure 5 montre un organigramme d'un procédé de recherche selon un mode de réalisation ; et
- la figure 6 montre schématiquement un ordinateur propre à exécuter un procédé selon un mode de réalisation présenté dans ce document.

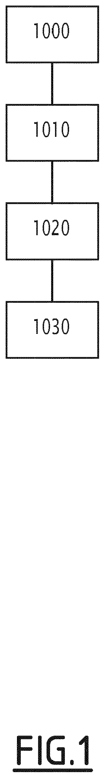

Figure 1 montre un organigramme d'un procédé d'apprentissage d'une intelligence artificielle pour la recherche multilingue. Par exemple le procédé est exécuté par un pour plusieurs dispositifs de traitement de données.

Dans une premier étape 1000 une pluralité de textes d'apprentissage est obtenue dans au moins deux langues différents. Par exemple une première partie des textes d'apprentissage est rédigée dans une première langue et une deuxième partie des textes d'apprentissage est rédigée dans une deuxième langue. En particulier, les textes d'apprentissage sont écrits dans au moins 5 langues différentes, dans un exemple dans au moins 10 langues différentes.

Dans un mode de réalisation, les textes d'apprentissage sont obtenus d'au moins une base de données. Dans un autre mode de réalisation, les textes d'apprentissage sont reçus par un réseau informatique, par exemple l'internet.

Dans une deuxième étape 1010, les textes d'apprentissage sont transformés dans un ou plusieurs vecteurs dans un espace latent par un algorithme d'intelligence artificielle. En d'autres mots, la sortie de l'algorithme d'intelligence artificielle comprend un ou plusieurs vecteurs dans l'espace latent représentant le texte d'apprentissage respectif. Par exemple l'algorithme d'intelligence artificielle est un réseau de neurones étant du type transformeur, par exemple un réseau de neurone du type transformeur pour le traitement automatique des langues (en anglais NLP- natural language processing). Un transformeur est un modèle d'apprentissage profond. Par exemple, le réseau de neurones du type transformeur fournit une cohérence sémantique. Un autre terme pour le réseau de neurones du type transformeur est un réseau connexionniste multilingues. L'article « Attention Is All You Need » de Ashish Vaswani et al. arXiv:1706.03762v5 [cs.CL] du 6 Dec 2017 divulgue un exemple d'un réseau de neurones du type transformeur.

Dans un mode de réalisation, le réseau de neurones comprend le transformeur BERT, acronyme anglais de « Bidirectional Encoder Représentations from Transformers ». Par exemple, le système LaBSE (« language-agnostic BERT sentence embedding » est utilisé pour créer les vecteurs dans espace latent à partir des textes d'apprentissage.

Dans un mode de réalisation, optionnellement, un réseau de neurones du type transformeur pre-entrainé est utilisé en tant que point de départ pour l'apprentissage dans l'étape 1010. Par exemple le réseau de neurones du type transformeur est pre-entrainé avec des textes de pré-apprentissage en plusieurs langues pour obtenir l'information sémantique des textes. Les textes de pré-apprentissage sont des textes correspondants dans chaque langue. Par exemple, le réseau de neurones du type transformeur donne des vecteurs latents pour chaque terme dans les textes de pré-apprentissage respectifs en sortie.

Par exemple, les textes de pré-apprentissage peuvent être égaux aux textes d'apprentissage. En d'autres modes de réalisation, les textes de pré-apprentissage sont différents des textes d'apprentissage.

Dans un mode de réalisation, le nombre de textes de pré-apprentissage est très supérieure au nombre de textes d'apprentissage.

Dans un mode de réalisation, lors de l'apprentissage, dans l'étape 1010, les noeuds du réseau de neurones du type transformeur sont modifiés tels que lors de la transformation des textes par l'algorithme de l'intelligence artificielle, les vecteurs dans l'espace latent correspondent aux lemmes pour chaque mot des textes d'apprentissage. En d'autres termes, les différentes formes d'un mot sont supprimées. Donc chaque mot d'un texte d'apprentissage est représenté dans l'espace latent par le vecteur du lemme correspondant au mot. Par exemple les mots « chien » et « chiens » sont représentés par un même vecteur dans l'espace latent.

Dans un mode de réalisation, des mots sans signification spécifique (aussi appelés « stop-words » en anglais) sont supprimés lors de la transformation des textes d'apprentissage. Par exemple, les mots sans signification spécifique, comme par exemple les articles, en particulier « le », « la » ou « au », ne sont pas transformés dans des vecteurs de l'espace latent.

Dans un mode de réalisation, le réseau de neurones du type transformeur a N couches. Par, exemple, les dernières K couches du réseau de neurones du type transformeur sont gelées lors de l'apprentissage. C'est-à-dire les paramètres des dernières K couches du réseau de neurones ne sont pas modifiées lors de l'apprentissage. Le nombre K de couches gelées dépend du réseau de neurones du type transformeur utilisé. K est inférieur à N. Par exemple au moins la dernière couche du réseau de neurones du type transformeur est gelée. En d'autres termes K est au moins 1. Les dernières couches sont les couches qui sont proches à la sortie du réseau de neurones.

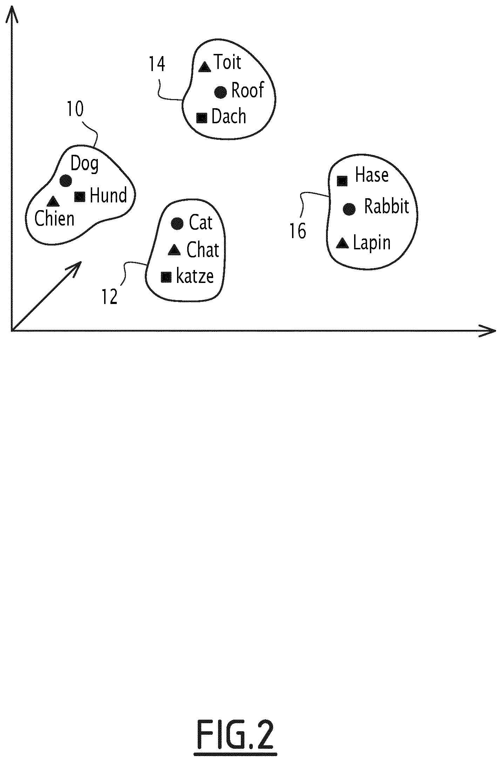

Figure 2 montre un espace latent pour des textes transformés. L'espace latent est un espace abstrait multidimensionnel qui contient des vecteurs pour chaque objet, ici des mots ou des lemmes. En autre termes, chaque mot et/ou lemme des textes d'apprentissage sont représenté par un vecteur dans l'espace latent. Lemmes ou mots ayant une signification similaire sont proches entre eux dans l'espace latent et lemmes ou mots ayant une signification très différente ont une distance importante entre eux. Pour trois langues plusieurs mots sont montrés, qui signifient respectivement le même objet, par exemple « chien » et « chat ».

Dans une étape optionnelle du procédé d'apprentissage, le réseau de neurones du type transformeur est entrainé telle manières que les vecteurs dans l'espace latent des mots similaires dans des différentes langues sont rapprochés les uns aux autres.

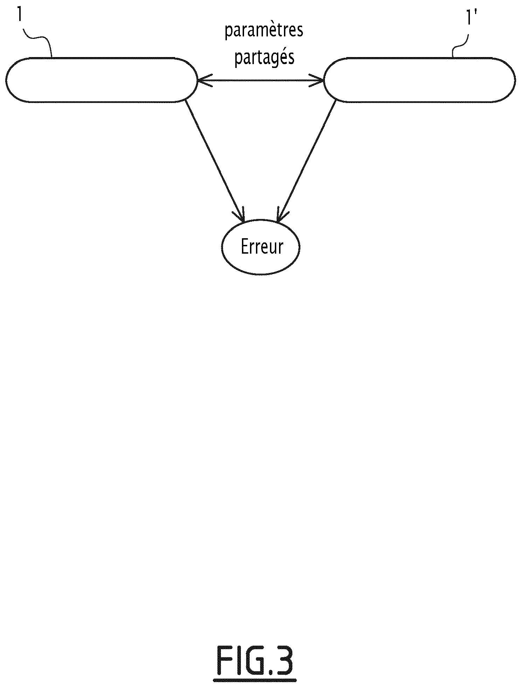

Figure 3 montre schématiquement une telle étape d'apprentissage optionnelle. Le réseau de neurones 1 du type transformeur est entrainé de manière suivante :
Des textes d'apprentissage écrits dans une première langue (à gauche sur la Figure 3) sont transformés dans au moins un premier vecteur dans l'espace latent. Le même réseau de neurones 1' est utilisé pour transformer les mêmes textes d'apprentissage écrits dans une langue de pivot dans au moins un deuxième vecteur dans l'espace latent (à droite sur la Figure 3). Le même réseau de neurones 1' signifie que les paramètres, par exemple les poids des noeuds du réseau de neurones, sont partagés entre le réseau de neurones 1 et le réseau de neurones 1'. Le même texte d'apprentissage signifie que le texte dans la première langue est une traduction du texte dans la langue de pivot ou inversement.

L'apprentissage des réseaux de neurones 1', 1 peut être fait en parallèle comme montré sur la Figure 3. Dans un autre mode de réalisation, le réseau de neurones 1, 1' est apprenti en séquence, c'est à dire, en premier temps le ou les textes écrits dans la première langue est transformé dans le ou les premiers vecteurs dans l'espace latent et ensuite le ou les mêmes textes écrits dans la langue de pivot sans changer les paramètres du réseau de neurones, en particulier les poids des noeuds, est transformé dans le ou les deuxièmes vecteurs dans l'espace latent, ou inversement. La langue de pivot est différente à la première langue.

Par exemple la langue de pivot pour l'apprentissage est l'anglais. Aussi d'autres langues pivot peuvent être utilisées à cette fin. En cas d'apprentissage parallèles, les paramètres des deux réseaux de neurones 1, 1' entrainées sont modifiés en même temps et sont identiques. En d'autres termes les réseaux de neurones 1 et 1' ont les mêmes paramètres.

Dans un mode de réalisation, une erreur entre le ou les premiers vecteurs dans l'espace latent et le ou les deuxièmes vecteurs, en particulier qui signifient le même terme, est minimisée. Par exemple, si l'espace latent est un espace euclidien une différence des moyennes ou somme des différences des moyennes glissantes du ou des premiers vecteurs et du ou des deuxièmes vecteurs, en particulier correspondants au premières vecteurs, peut être minimisée. Dans un autre exemple, si l'espace latent est un espace statistique, une divergence de Kullback-Leibler est minimisée entre le ou les premiers vecteurs et le ou les deuxièmes vecteurs, qui en particulier correspondent aux premières vecteurs.

L'erreur est minimisée en rétro-propageant l'erreur dans le réseau de neurones 1, 1' pour adapter les paramètres du réseau de neurones 1, 1'. Lors de cette adaptation du réseau de neurones 1, 1', les N-K premières couches sont gelées. Donc seulement les paramètres des K dernières couches du réseau de neurones sont modifiés.

Les deuxièmes vecteurs et les premiers vecteurs qui correspondent entre eux sont transformés depuis des mots qui ont la même signification, comme décrit ci-dessus.

L'étape d'apprentissage optionnelle décrite ci-dessus est réitérée avec chaque pair de langue dont une langue du pair de langues est la langue de pivot.

Après l'apprentissage, lors d'une transformation par le réseau de neurones d'un texte dans l'espace latent, les mots signifiant la même chose dans plusieurs langues comme « rabbit », « lapin » et « Hase » sont proches entre eux dans l'espace latent.

Dans l'étape 1020 les vecteurs correspondant au mots dans l'espace latent sont regroupés (« clustering » en anglais). En d'autres termes, chaque vecteur dans l'espace latent des textes d'apprentissage est associé à un groupe de vecteurs parmi d'une pluralité de groupes de vecteurs. Dans un mode de réalisation, le nombre de groupes est fixé en avance. Par exemple le nombre de groupes est entre 2000 et 20000, par exemple entre 5000 et 15000.

Lors de regroupement, dans une première étape optionnelle une réduction de nombre des dimensions est effectuée, par exemple par une « Nonlinear dimensionality réduction » (réduction non-lineaire de dimensions en français), par exemple Uniform Manifold Approximation and Projection (UMAP) ou une analyse en composantes principales. D'autres techniques peuvent être également utilisés.

Dans la suite, pour le regroupement des données, en particulier pour créer les groupes, un partitionnement de données est effectué, par exemple par des k-moyennes (k-means en anglais) ou un DBSCAN (density-based spatial clustering of applications with noise). D'autres techniques peuvent être également utilisés.

La Figure 2 montre un premier group 10 et un deuxième groupe 12 de vecteurs dans l'espace latent, optionnellement avec la réduction de nombre des dimensions. Par exemple, les vecteurs proches entre eux peuvent être regroupés dans un groupe.

Dans l'étape 1030, pour chaque groupe un vecteur représentatif pour son groupe 10, 12, 14, 16 est déterminé. Par exemple un centroïde dans l'espace latent est déterminé pour chaque groupe 10, 12, 14, 16 en tant que vecteur représentatif. Le vecteur représentatif, en particulier le centroïde, est un vecteur dans l'espace latent ou dans l'espace latent avec la réduction de nombre des dimensions.

Chaque vecteur représentatif pour un groupe 10, 12, 14, 16, par exemple le centroïde, est attribué ou associé à un identificateur unique. Par exemple, l'identificateur unique peut être un nombre entier. Dans d'autres modes de réalisation, chaque identificateur unique peut être un code. Par exemple, le groupe 10 peu avoir l'identificateur unique 1, le groupe 12 peu avoir l'identificateur unique 2, le groupe 14 peu avoir l'identificateur unique 3 et le groupe 16 peu avoir l'identificateur unique 4. Donc, chaque groupe 10, 12, 14, 16 est associé à un identificateur unique.

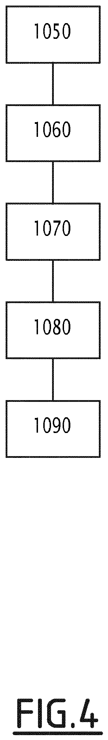

Figure 4 montre un procédé d'indexation selon un mode de réalisation. Le procédé d'indexation est par exemple exécuté sur au moins un dispositif de traitement de données, par exemple un ou plusieurs serveurs. Le dispositif de traitement de données peut être le même dispositif de traitement de données que celui utilisé pour le procédé d'apprentissage ou un dispositif de traitement de données différent.

Dans une premier étape 1050, une pluralité de textes à indexer est obtenue dans au moins deux langues différentes. Par exemple, une première partie des textes à indexer est rédigée dans une première langue et une deuxième partie des textes à indexer est rédigée dans une deuxième langue. En particulier, les textes à indexer sont écrits dans au moins 5 langues différentes, dans un exemple dans au moins 10 langues différentes.

Dans un mode de réalisation, les textes à indexer sont obtenus d'au moins une base de données. Dans un autre mode de réalisation, les textes à indexer sont reçus par un réseau informatique, par exemple l'internet.

Par exemple un premier texte en français est « Le chat échappe au chien mordant». Un deuxième texte en allemand est « Die Katze sitzt auf dem Dach » (en français « Le chat est assis sur le toit » et un troisième texte en anglais est « The dog is hunting a rabbit » (en français « Le chien chasse un lapin »).

Dans l'étape 1060, le réseau de neurones du type transformeur qui a été entrainé selon le procédé d'apprentissage décrit ci-dessus est utilisé pour déterminer les vecteurs dans l'espace latent des textes à indexer respectifs. Dans une étape optionnelle, une réduction de nombre des dimensions est effectuée, par exemple en utilisant la transformation utilisée lors du procédé d'apprentissage, par exemple lors de l'étape 1020.

Dans l'étape 1070, dans l'espace latent (optionnellement réduit en dimensions), pour chaque vecteur de chaque texte à indexer au moins un identificateur d'un groupe le plus proche est déterminé. Les groupes étant fixés lors de l'étape 1020 du procédé d'apprentissage et l'identificateur étant fixé lors de l'étape 1030 du procédé d'apprentissage.

A cet effet, l'identificateur unique étant associé au vecteur représentatif pour un groupe le plus proche, parmi la pluralité des vecteurs représentatifs disponibles, est déterminé. Par exemple, le centroïde le plus proche ou les centroïdes les plus proches au vecteurs respectifs dans l'espace latent du texte à indexer est/sont déterminé(s). Dans un autre mode de réalisation, les deux, trois, quatre ou cinq identificateurs des groupes 10, 12, 14, 16 les plus proches au vecteurs respectifs dans l'espace latent du texte à indexer sont déterminés.

Les identificateurs des groupes 10, 12, 14, 16 déterminés sont associés aux textes respectifs pour créer un index des textes à indexer.

En d'autres termes, des informations agnostiques des textes à indexer sont créées (étape 1080), les informations agnostiques comprenant des identificateurs des vecteurs représentatifs pour des groupes dans l'espace latent qui sont proches aux un vecteur latent des textes à indexer respectifs qui ont été transformé par le réseau de neurones type transformeur. Les informations agnostiques sont associées aux textes respectifs.

Dans un autre mode de réalisation, l'information agnostique est créé sous forme d'un texte agnostique contenant que les identificateurs des vecteurs représentatifs pour des groupes dans l'espace latent qui sont proches aux un vecteur latent des textes à indexer respectifs qui ont été transformé par le réseau de neurones type transformeur. Alternativement les informations agnostiques pour chaque texte à indexer est une liste des identificateurs. Aussi autres formes des informations agnostiques sont possibles par exemple sous forme d'une ou plusieurs entrées dans une base de données.

Par exemple, en prenant les textes à indexer présentés ci-dessus, le premier texte agnostique est « 1 2 », le deuxième texte agnostique est « 2, 3 » et le troisième texte agnostique est « 1, 4 ».

A l'étape 1090 un algorithme d'indexation est appliqué aux informations agnostiques, notamment aux textes agnostiques. Par exemple, un moteur d'indexation classique peut être utilisé. Par exemple, une statistique est créée. L'index crée par l'algorithme d'indexation permet de chercher un texte à l'aide de l'index. Par exemple l'index comprend association entre des identificateurs et les textes à indexer.

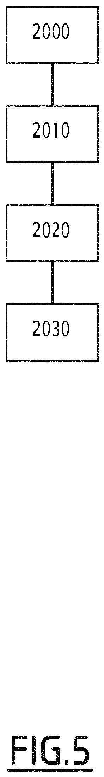

Figure 5 montre schématiquement un organigramme d'un procédé de recherche. Le procédé est par exemple exécuté sur au moins dispositif de traitement de données, par exemple un ou plusieurs serveurs. Le dispositif de traitement de données peut être le même dispositif de traitement de données que pour le procédé d'apprentissage et/ou pour le procédé d'indexation ou un dispositif de traitement de données différent.

Lors de l'étape 2000 un terme de recherche est obtenu. Dans un mode de réalisation, un utilisateur peut avoir saisi un terme de recherche dans un formulaire de recherche. Par exemple l'utilisateur saisi le terme de recherche dans un appareil ou ordinateur à distance du dispositif de traitement de données. Dans un exemple concrète, l'utilisateur saisi le mot français « chatte » en tant que terme de recherche dans le formulaire de recherche. Le terme de recherche saisi dans l'appareil ou ordinateur est transmis par un réseau informatique, par exemple l'internet, au dispositif de traitement de données.

Dans l'étape 2010, par exemple par le dispositif de traitement de données, au moins un mot du terme de recherche est transformé dans au moins un vecteur de l'espace latent en utilisant le réseau de neurones du type transformeur qui a été entrainé selon le procédé d'apprentissage décrit ci-dessus. Par exemple, un vecteur dans l'espace latent est obtenu représentant le mot « chatte ». Dans un mode de réalisation, par exemple lorsque le terme de recherche contient plusieurs mots, plusieurs vecteurs sont obtenus représentant le terme de recherche.

Dans une étape optionnelle, une réduction de nombre des dimensions est effectuée, par exemple en utilisant la transformation utilisée lors du procédé d'apprentissage, par exemple lors de l'étape 1020.

Dans l'étape 2020, par exemple par le dispositif de traitement de données, pour chaque vecteur dans l'espace latent du terme de recherche, l'identificateur étant associé au vecteur représentatif pour un groupe le plus proche, parmi la pluralité des vecteurs représentatifs disponibles, est déterminé. Par exemple, le centroïde le plus proche est déterminé.

Dans ce cas d'exemple, c'est le représentant du groupe 12 qui est sélectionné et l'identificateur correspondant « 2 » est obtenu. Dans un autre mode de réalisation, les deux, trois, quatre ou cinq identificateurs des groupes les plus proches au vecteur dans l'espace latent du terme de recherche sont déterminés. En d'autres mots, le terme de recherche est transformé en un terme de recherche agnostique.

Ensuite, à l'étape suivante 2030, par exemple par le dispositif de traitement de données, le ou les identificateurs obtenu(s) est/sont recherché(s) dans l'index créé lors de l'étape 1080. Ensuite, le ou les textes à indexer sont déterminés ayant le ou les mêmes identificateurs. Or, on trouve, dans l'exemple ci-dessus, les le premier et le deuxième texte.

Dans la suite, au moins un lien vers le premier texte et le deuxième texte est envoyé, par exemple par le dispositif de traitement de données, à l'appareil ou ordinateur de l'utilisateur.

L'invention peut être mise en oeuvre dans des systèmes d'information gérant plusieurs langues et qui nécessitent des opérations de recherche d'information multilingue

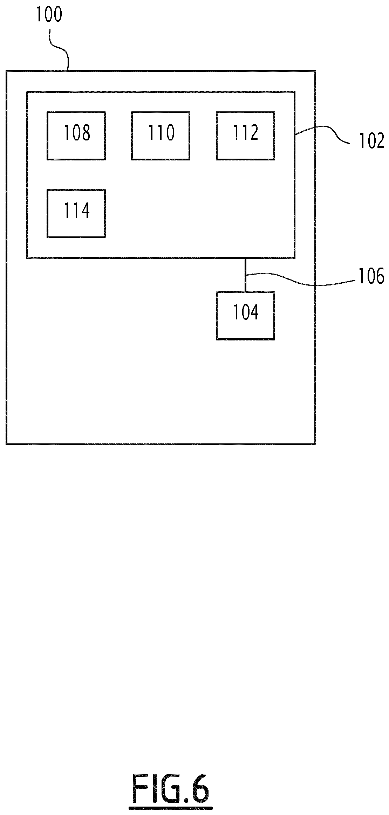

Figure 6 montre un dispositif de traitement de données 100 avec lequel au moins une partie des étapes des procédés selon l'invention peuvent être exécutés. Les étapes peuvent être exécuté sur un seul dispositif de traitement de données 100 ou sur plusieurs dispositifs de traitement de données 100.

Le dispositif de traitement de données 100 est par exemple un système informatique composé d'un ou plusieurs dispositifs électroniques programmables, i.e. des ordinateurs. Pour simplifier l'explication, on considère que le dispositif de calcul 100 est un ordinateur comportant un processeur 102 et une unité de mémoire électronique 104, adaptés à communiquer via un bus de communication 106. Ce dispositif de traitement de données 100 est configuré pour mettre en oeuvre l'invention.

Le processeur 102 du dispositif de traitement de données 100 est configuré pour mettre en oeuvre un module 108 d'obtention de données initiales, par exemple les textes d'apprentissage, les textes à indexer et/ou le terme de recherche, un module 110 de calcul des transformés dans l'espace latente, par exemple pour mettre en oeuvre les étapes 1010, 1060 et/ou 2010, un module 112 pour déterminer les identificateurs, par exemple pour mettre en oeuvre les étapes 1030, 1070, 1080 et 2020, un module 114 pour l'indexation des informations agnostiques selon l'étape 1090 et un module 116 pour mettre en oeuvre l'étape 2030.

Les modules 108, 110, 112, 114, 116 sont adaptés à coopérer, comme décrit plus en détail ci-dessus, pour mettre en oeuvre un ou plusieurs procédés selon l'invention.

Dans un mode de réalisation, les modules 108, 110, 112, 114, 116 sont réalisés sous forme d'instructions logicielles formant un programme d'ordinateur, qui, lorsqu'il est exécuté par un ordinateur, met en oeuvre un procédé selon l'invention.

En variante non représentée, les modules 108, 110, 112, 114, 116 sont réalisés chacun sous forme de composants logiques programmables, tels que des FPGA (de l'anglais Field Programmable Gate Array), des microprocesseurs, des composants GPGPU (de l'anglais General-purpose processing on graphies processing), ou encore de circuits intégrés dédiés, tels que des ASIC (de l'anglais Application Spécifie Integrated Circuit).

Le programme d'ordinateur comportant des instructions logicielles est en outre apte à être enregistré sur un support non transitoire lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

## Revendications

1. Procédé mis en oeuvre par ordinateur pour une indexation d'une pluralité de textes à indexer, les textes étant rédigés dans au moins deux langues différentes, le procédé comprenant les étapes suivantes :
obtenir (1050) la pluralité de textes à indexer, les textes étant rédigés dans au moins deux langues différentes ;
transformer (1060), par un réseau de neurones du type transformeur, les textes à indexer dans un ou plusieurs vecteurs dans un espace latent, le réseau de neurones étant appris avec des textes d'apprentissage lors d'un procédé d'apprentissage en gelant les dernières K couches du réseau de neurones ayant N couches pour supprimer des mots sans signification spécifique, K étant inférieur à N ;
déterminer (1070) pour chaque vecteur pour chaque texte à indexer au moins un identificateur unique d'un groupe le plus proche, les groupes étant fixés lors du procédé d'apprentissage en regroupant des vecteurs dans l'espace latent des textes d'apprentissage et en associant un identificateur unique à chaque groupe ;
créer (1080) des informations agnostiques des textes à indexer, les informations agnostiques comprenant les identificateurs uniques déterminés, et associer les informations agnostiques aux textes à indexer respectifs ;
indexer (1090) les informations agnostiques pour créer un index.

2. Procédé selon la revendication 1, dans lequel les textes sont rédigés dans au moins cinq langues différentes.

3. Procédé selon la revendication 1 ou 2, dans lequel l'algorithme d'intelligence artificielle est un réseau de neurones étant du type transformeur pour le traitement automatique des langues.

4. Procédé selon la revendication 3, dans lequel le nombre K des couches est supérieur à ou égale à un.

5. Procédé selon l'une des revendications précédentes dans lequel, lors du procédé de l'apprentissage du réseau de neurones du type transformeur, le réseau de neurones (1, 1') du type transformeur est entrainé en transformant des textes d'apprentissage écrits dans une première langue dans au moins un première vecteur dans l'espace latent et les mêmes textes d'apprentissage écrits dans une langue pivot dans au moins un deuxième vecteur dans l'espace latent, les paramètres du réseau de neurones (1, 1') du type transformeur entrainés sont identiques lors de la transformation des textes d'apprentissage écrits dans la première langue et des mêmes textes écrits dans la langue pivot dans le ou les vecteurs de l'espace latent, et en minimisant une erreur entre le ou les premiers vecteurs et le ou les deuxièmes vecteurs, dans lequel les N-K premières couches du réseau de neurones sont gelées.

6. Procédé selon l'une des revendications précédentes dans lequel chaque groupe étant représenté par un vecteur représentatif pour son groupe, en particulier un centroïde, l'étape déterminer (1070) pour chaque vecteur de chaque texte à indexer au moins un identificateur unique d'un groupe le plus proche comprend déterminer pour chaque vecteur de chaque texte à indexer au moins le vecteur représentatif le plus proche.

7. Procédé mis en oeuvre par ordinateur de recherche d'un mot dans une pluralité de textes indexés, les textes étant rédigés dans au moins deux langues différentes, le procédé comprenant les étapes suivantes :
obtenir (2000) un terme de recherche ;
transformer (2010), par un algorithme d'intelligence artificielle comprenant un réseau de neurones du type transformeur, le terme de recherche dans au moins un vecteur d'un espace latent, le réseau de neurones étant appris avec des textes d'apprentissage lors d'un procédé d'apprentissage en gelant les dernières K couches du réseau de neurones ayant N couches pour supprimer des mots sans signification spécifique, K étant inférieur à N ;
déterminer (2020) pour chaque vecteur dans l'espace latent du terme de recherche un identificateur unique d'un groupe le plus proche, les groupes étant fixés lors du procédé d'apprentissage en regroupant des vecteurs dans l'espace latent des textes d'apprentissage et en associant un identificateur unique à chaque groupe ;
chercher (2030) dans l'index crée selon le procédé de l'une des revendications précédentes le ou les identificateurs uniques déterminés ; et
déterminer (2040) le ou les textes indexés étant associés aux identificateurs uniques déterminés.

8. Dispositif de traitement de données comprenant des moyens de mettre en oeuvre les étapes du procédé selon l'une des revendications précédentes.

9. Produit programme d'ordinateur comprenant des instructions qui, lorsque le programme est exécuté par un ordinateur, conduisent celui-ci à mettre en oeuvre les étapes du procédé selon l'une des revendications 1 à 7.

10. Signal d'un support de données, portant le produit programme d'ordinateur selon la revendication 9.
